# EUROPEAN PATENT SPECIFICATION

(11) **EP 1 318 052 B1**
(45) Date of publication and mention of the grant of the patent: **05.10.2005**
(21) Application number: 02024988.4
(22) Date of filing: 07.11.2002
(51) Int. Cl.: B60R 21/16

(54) **Air bag**
Gassack
Coussin gonflable

(30) Priority: 06.12.2001 JP 2001372950
(43) Date of publication of application: 11.06.2003
(73) Proprietor: TAKATA CORPORATION, Tokyo 106-8510 (JP)
(72) Inventor: Gu, Weixin, Minato-ku, Tokyo 106-8510 (JP)
(74) Representative: Banzer, Hans-Jörg

(56) References cited:
- EP-A- 1 279 566
- WO-A-00/03898
- WO-A-00/71389
- PATENT ABSTRACTS OF JAPAN vol. 013, no. 588 (M-912), 25 December 1989 (1989-12-25) -& JP 01 247242 A (TAKATA KK), 3 October 1989 (1989-10-03)

## Description

### [Technical Field of the Invention]

The present invention relates to an air bag for protecting human bodies by rapidly expanding in case of an emergency such as a collision of a high-speed mobile body such as a vehicle.

### [Description of the Related Art]

In order to protect occupants of a car in case of an emergency such as a collision of the car, various air bag devices such as air bag devices for use in a driver's seat are in use. The air bag devices for use in the driver's seat has an air bag formed by sewing up the peripheral edge portion of the front panel on the occupant side and that of the rear panel on the side opposite to the occupant side. An opening for engaging with an inflator is provided in the center of the rear panel, for receiving the front end side of the inflator. The surrounding of this opening is affixed to a retainer by bolts, pins, and rivets or the like. The rear panel has vent holes for letting the gas in the air bag escape to absorb an impact when an occupant on the driver's seat plunges into the air bag.

Japanese Unexamined Patent Application Publication No. 1-247242 discloses an air bag in which an inner panel is provided so as to act as a bridge between an opening for an inflator in the rear panel and the front panel, and the inside of which is partitioned into a first chamber disposed at the center of the air bag and a second chamber surrounding the first chamber. This inner panel is substantially circular in a plan view, and the outer peripheral edge portion thereof is connected to the intermediate portion between the center and the periphery edge of the front panel. An opening for the inflator is provided at the center of the inner panel, and the edge portion of this opening is affixed to a retainer together with the rear panel. The inner panel has communication ports for allowing the first chamber to communicate with the second chamber. Once the inflator has come into operation, firstly the first chamber is inflated, and subsequently the second chamber is inflated. The inflation in the second chamber is completed later than the first chamber because gas flows into the second chamber from the first chamber through the communication ports.

A similar air bag, with features corresponding to the preamble of claim 1, is known from WO 00/03898.

### [Problems to be Solved by the Invention]

It is an object of the present invention to substantially simultaneously complete the inflation of the first chamber and the second chamber in a air bag of which the inside is thus partitioned into the first and second chambers by means of the inner panel.

### [Means for Solving the Problems]

According to the present invention, this object is achieved by an air bag as defined in claim 1. The dependent claims define advantageous and preferred embodiments of the present invention.

The air bag according to the present invention (claim 1) of which the inside is partitioned into a plurality of chambers, and which is inflated by gas from an inflator, is characterized in comprising a gas receiving chamber for receiving the gas from the inflator, and communication ports provided so as to directly supply the gas from the gas receiving chamber to each of the chambers.

In this air bag, with the gas coming into operation, firstly the gas from the inflator is introduced into the gas receiving chamber, and is directly distributed from the gas receiving chamber to each of the chambers (for example, the first chamber and the second chamber) through communication ports, thereby inflating all chambers substantially at the same time.

According to an embodiment of the present invention, the air bag includes a front panel disposed on the occupant side and a rear panel disposed on the opposite side of the occupant, the front panel and the rear panel being connected at their peripheral edge portions with each other. In this air bag, an opening for the inflator is provided at the center of the rear panel; an inner panel that partitions the inside of the air bag into a central first chamber and a second chamber surrounding the first chamber is provided; an opening disposed substantially concentrically with the opening of the rear panel, is provided at the center of the inner panel; the peripheral edge portion of the inner panel is connected to the intermediate portion between the central portion and the peripheral edge portion of the front panel; a partition panel that partitions the inside of the first chamber, thereby forming the gas receiving chamber on the side of the opening for the inflator, is connected to the inner panel; communication ports for allowing the gas receiving chamber to communicate with the first chamber, are provided in the partition panel; and communication ports for allowing the gas receiving chamber to communicate with the second chamber, are provided in the inner panel.

In this air bag, since the front panel is connected to the edge portion of the opening for the inflator via the inner panel, the connection between the front panel and the opening for the inflator is significantly strong.

According to another embodiment of the present invention, the air bag includes a front panel disposed on the occupant side and a rear panel disposed on the opposite side of the occupant, the front panel and the rear panel being connected at their peripheral edge portions with each other.

In this air bag, an opening for the inflator is provided at the center of the rear panel; an inner panel that partitions the inside of the air bag into a first chamber disposed at the center of the air bag and a second chamber surrounding the first chamber, is provided; a partition panel that forms the gas receiving chamber between the inner panel and the opening for the inflator, is provided; an opening disposed substantially concentrically with the opening of the rear panel, is provided at the center of the partition panel; the peripheral edge portion of the partition panel is connected to the intermediate portion between the central portion and the peripheral edge portion of the inner panel;
communication ports for allowing the first chamber to communicate with the gas receiving chamber, are provided in the inner panel; and communication ports for allowing the gas receiving chamber to communicate with the second chamber, are provided in the partition panel.

Even in such an air bag, by strengthening the connection between the partition panel and the inner panel, it is possible to strongly connect the front panel to the edge portion of the opening for the inflator in the rear panel.

According to still another embodiment of the present invention, the air bag includes a front panel disposed on the occupant side and a rear panel disposed on the opposite side of the occupant, the front panel and the rear panel being connected at their peripheral edge portions with each other. In this air bag, an opening for the inflator is provided at the center of the rear panel; an inner panel that partitions the inside of the air bag into a first chamber disposed at the center of the air bag and a second chamber surrounding the first chamber, is provided; a cylindrical partition panel of which the inside is formed as the above-described gas receiving chamber, is provided, the partition panel having an opening disposed substantially concentrically with the opening of the rear panel; the peripheral edge portion of the inner panel is connected to the front panel, and the central portion of the inner panel is connected to the partition panel; communication ports for allowing the first chamber to communicate with the gas receiving chamber, are provided in each of the inner panel and the partition panel; and the end portions of the cylindrical partition panel constitute communication ports for allowing the gas receiving chamber to communicate with the second chamber.

In this air bag, the gas can be jetted from the cylindrical partition panel in the extending direction of the cylinder up to the second chamber, thereby allowing the second chamber to be rapidly inflated in the direction of the increasing radius of the air bag.

In the air bag according to these embodiments, the arrangement may be such that vent holes are provided in the rear panel, and that inner vent holes for allowing the first chamber to communicate with the second chamber, are provided in the above-described inner panel. When an occupant plunges into the first chamber, the gas in the first chamber flows out into the second chamber through the inner vent holes, and then the gas flows out from the vent holes, thereby absorbing an impact.

### [Brief Description of the Drawings]

Fig. 1 is a sectional view showing the air bag device equipped with an air bag according to an embodiment of the present invention.
Fig. 2 is an exploded perspective view illustrating the air bag device shown in Fig. 1.
Figs. 3(a) to 3(d) are representations of other embodiments of inner panels according to the present invention.
Fig. 4 is a sectional view showing an air bag according to another embodiment of the present invention.
Fig. 5 is a sectional view showing an air bag according to still another embodiment of the present invention.

### [Description of the Embodiments]

Hereinafter, the embodiments according the present invention will be described with reference to the drawings.

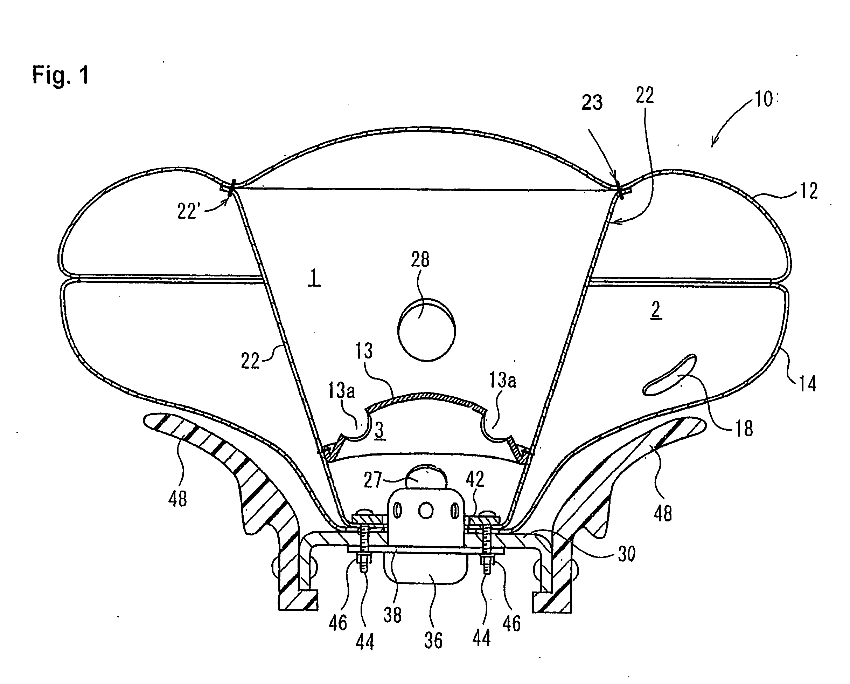

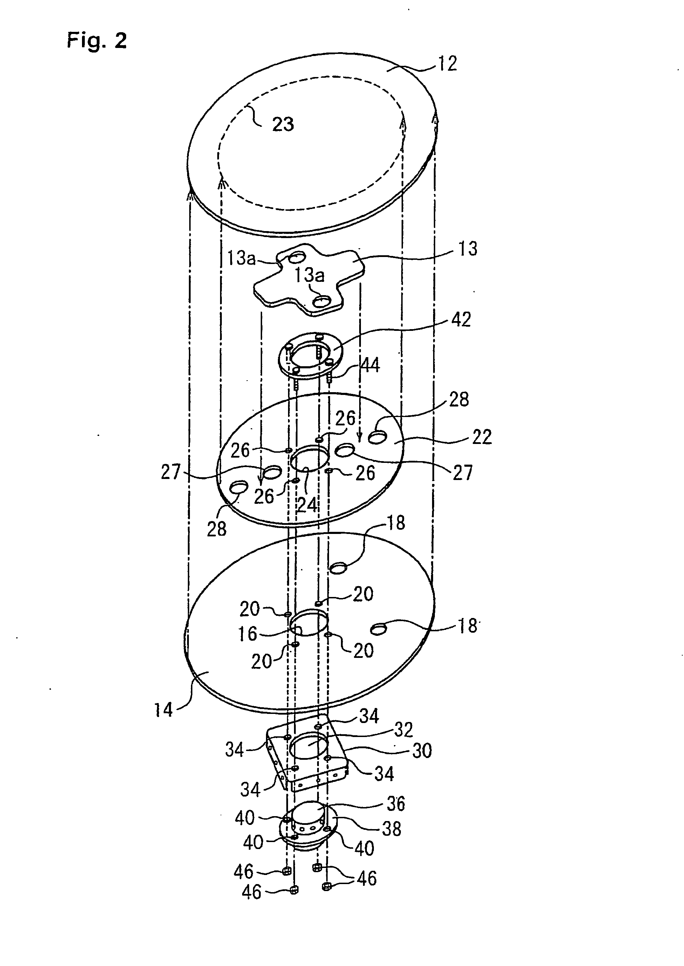

Fig. 1 is a sectional view showing an air bag device equipped with an air bag for use in a driver's seat of a car, according to an embodiment of the present invention, in which the air bag is in an inflated state. Fig. 2 is an exploded perspective view showing the air bag and the air bag device.

This air bag 10 has a front panel 12, a rear panel 14, and an inner panel 22 each constituted of a woven circular cloth, and also has a partition panel 13 connected to the inner panel 22. The front panel 12 and the rear panel 14 have the same diameter, and are formed into a bag shape by sewing up the outer peripheral edge portions thereof. The sewn portion constitutes an annular shape formed by going round along the outer periphery of the front panel 12 and the rear panel 14.

The rear panel 14 has an opening 16 for an inflator and vent holes 18. The opening 16 for an inflator in the rear panel 14 is disposed at the center of the rear panel 14. Bolt through-holes 20 are provided around the opening 16 for an inflator.

Inside the air bag 10, there is provided the inner panel 22. The inner panel 22 is disposed substantially concentrically with the front panel 12 and the rear panel 14, and the peripheral edge portion thereof is sewn to the intermediate portion between the central portion and the peripheral edge portion of the front panel 12. Reference numeral 23 denotes this sewn portion (seam). The seam 23 has an annular shape.

At the center of the inner panel 22, an opening 24 for an inflator disposed substantially concentrically with the opening 16 for an inflator in the rear panel 14, is provided. These openings 16 and 24 have substantially the same diameter. Bolt through-holes 26 of the rear panel 14 overlying the bolt through-holes 20, are provided around the opening 24 of inner panel 22.

The inner panel 22 includes inner vent holes 28 provided relatively adjacently to the outer peripheral edge thereof, and communication ports 27 provided further toward the inner peripheral side than the inner vent holes 28.

The partition panel 13, which has a size enough to cover the above-described communication ports 27 and the opening 24 for an inflator disposed at the center, are superimposed on the inner panel 22, and the peripheral edge portion of the partition panel 13 is sewn to the inner panel 22. The partition panel 13 has communication ports 13a.

The peripheral edge portion of the opening 24 for an inflator in the inner panel 22 is superimposed on that of the opening 16 for an inflator in the rear panel 14, and is further superimposed on the peripheral edge portion of an inflator installation opening 32 of the retainer 30. The peripheral edge portions of the openings 24 and 16 for an inflator are fixed to the retainer 30 through the bolt through-holes 26 and 20, respectively. As a result, the peripheral edge portion of the opening 24 for an inflator in the inner panel 22 joins with that of the opening 16 for an inflator in the rear panel 14, and the peripheral edge portion of the inner panel 22 joins with the front panel 12 by the sewn portion 23.

By the inner panel 22 and the partition panel 13, the inside of the air bag 10 is partitioned into a first chamber 1 disposed at the center, a second chamber 2 surrounding the first chamber 1, and a gas receiving chamber 3. The first chamber 1 is located inside the inner panel 22 and simultaneously outside (above) the partition chamber 13. The gas receiving chamber 3 is located inside the inner panel 22 and simultaneously between the partition chamber 13 and the inflator 36. Here, the partition panel 13 has a substantially cruciform shape, but the shape thereof is not limited to the cruciform shape.

In this embodiment, two pieces of the cruciform partition panel 13, which extend to the sides opposite to each other, each has therein a communication port 13a, and the two remaining pieces thereof overlies the communication ports 27. Each of the communication ports 13a and one of the inner vent holes 28 are mutually out of phase in the peripheral direction with respect to the center of the air bag.

A reinforcement patch or the like may be affixed to the peripheral edge portion of each of the openings 16 and 24, the communication ports 27, and the vent holes 28.

The retainer 30 for installing the air bag 10 has an inflator installation opening 32 disposed at the center thereof, and has bolt through-holes 34 disposed therearound.

The flange 38 of the inflator 36 has bolt through-holes 40. The inflator 36 is fitted into the inflator installation opening 32 of the retainer 30.

When the air bag 10 is to be affixed to the retainer 30, the peripheral edge portions of the openings 16 and 24 for the inflator in the rear panel 14 and the inner panel 22 are pressed against the peripheral edge portion of the inflator installation opening 32 of the retainer, using a retaining ring 42.

In this case, stud bolts 44 of the retaining ring 42 are passed through bolt through-holes 26, 20, 34, and 40, and each of the stud bolts is fastened at the front end with a nut 46, thereby fixing the inner panel 22, the air bag 10, and inflator 36 to the retainer 30. Then, the air bag 10 is folded up, and a module cover 48 is affixed to the retainer 30 so as to cover the folded body of the air bag 10, thereby constituting an air bag device. This air bag device is mounted to the steering wheel (not shown) of the car.

Upon collision of a vehicle, the inflator 36 comes into operation, and gas jets into the air bag 10. The air bag 10 is inflated by the gas and forces the module cover 48 open. Then, the air bag 10 is developed in the vehicle room and protects an occupant on the driver's seat. Herein, the gas from the inflator 36 firstly flows into the gas receiving chamber 3, and from this gas receiving room 3, it flows into the first chamber 1 and the second chamber 2 substantially at the same time through the communication ports 13a and 27, thereby inflating the first and second chambers 1 and 2 substantially at the same time.

When the occupant plunges into the inflated air bag 10, the inside gas flows out through the vent holes 18 or the inner vent holes 28, thereby absorbing an impact.

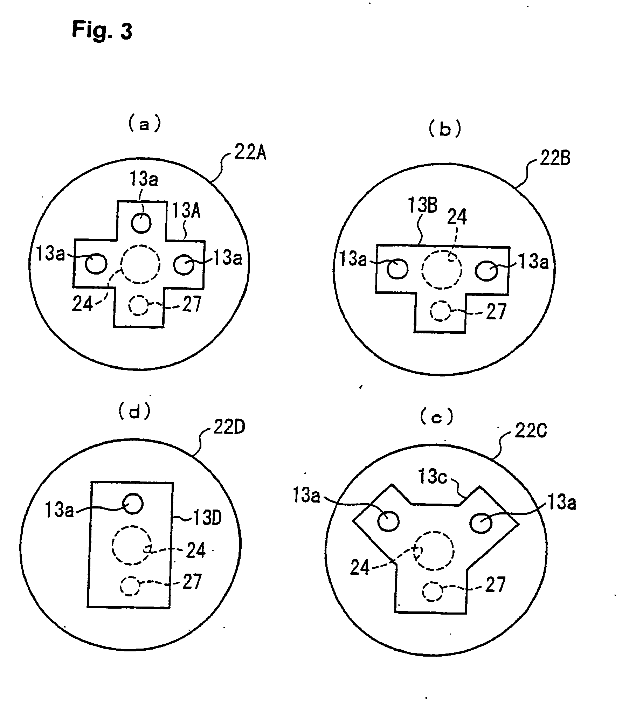

In the present invention, as the inner panel and the partition panel, ones that are shown in Figs. 3(a) to 3(d) may be employed, as described below.

In Fig. 3(a), an inner panel 22A has one communication port 27, and a cruciform partition panel 13A has three communication ports 13a. The communication ports 13a are disposed in three pieces of the cruciform partition panel 13A, and the one remaining piece thereof overlies the communication port 27.

In Figs. 3(b) and 3(c), an inner panel 22B has one communication port 27, and partition panels 13B and 13C each constituted of three pieces each have two communication ports 13a. The communication ports 13a are provided in two pieces of each the partition panel 13B and 13C, and the one remaining piece of each of the partition panel 13B and 13C overlies the communication port 27. Here, the partition panel 13B in Fig. 3(b) has a T-shape, and the communication ports 13a thereof are provided in the two pieces thereof that extend in the directions opposite to each other. In Fig. 3(c), the partition panel 13C is constituted of three pieces that extend in the directions toward positions on the circumference of the inner panel 22C, the positions substantially trisecting the circumference.

In Fig. 3(d), an inner panel 22D has one communication port 27, and a rectangular partition panel 13D has one communication port 13a. The communication port 13a and the communication port 27 are disposed on the sides opposite to each other with the opening 24 for the inflator therebetween.

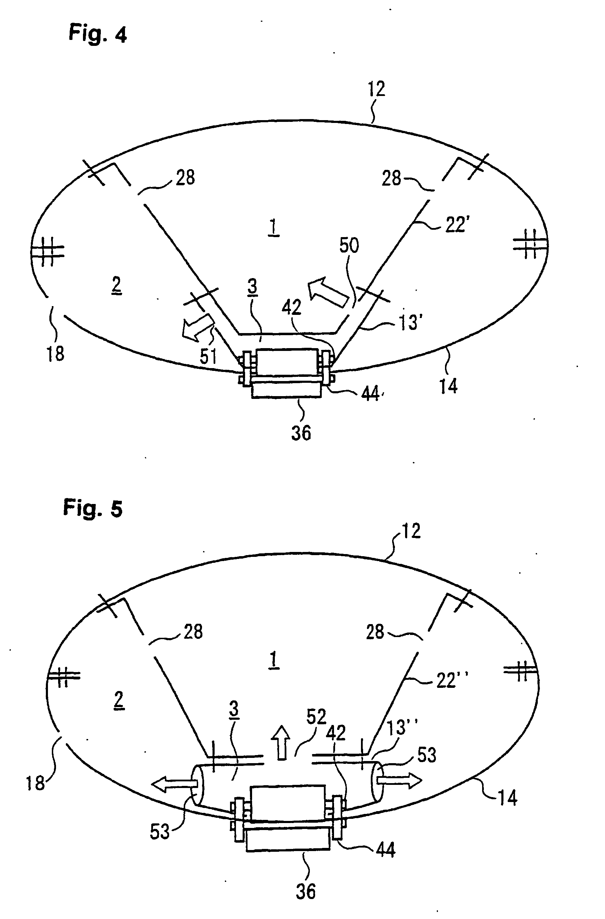

Figs. 4 and 5 are sectional views showing air bags according to other embodiments of the present invention, in which the air bag is in an inflated state.

In the air bag shown in Fig. 4, a partition panel 13' is interposed between the inner panel 22' and the inflator 36. The outer peripheral end of the partition panel 13' is connected to the middle between the center and the peripheral edge of the inner panel 22' (however, to a position further toward the center side than the inner vent hole 28). The inner peripheral end of the partition panel 13' is connected to the rear panel 14 and the retainer 30 (not shown in Fig. 4) using the retaining ring 42.

The gas from the inflator 36 directly flows into the first and second chambers 1 and 2 from the gas receiving chamber 3 disposed between the vicinity of the central portion of the inner panel 22' and the partition panel 13', through communication ports 50 and 51, thereby inflating the first and second chambers 1 and 2 substantially at the same time.

In the air bag shown in Fig. 5, a cylindrical partition panel 13" is interposed between the vicinity of the central portion of an inner panel 22" and the inflator 36. The partition panel 13" is arranged so that the cylinder axis direction thereof is along the retainer 30 (not shown in Fig. 5). The partition panel 13" has an opening for the inflator provided on the bottom surface side thereof, and the peripheral edge portion of the opening for the inflator is connected to the retainer 30 and the rear panel 14 using the retaining ring 42. The inside of the cylindrical partition panel 13" constitutes the gas receiving chamber 3, and the two ends thereof form communication ports 53.

The top surface side of the partition panel 13" is connected to the vicinity of the center of the inner panel 22". The partition panel 13" and the inner panel 22" have a communication port 52 for allowing the inside of the gas receiving chamber 3 to communicate with the first chamber 1 in the inner panel 22".

Once the inflator 36 has come into operation, the gas directly flows into the first and second chambers 1 and 2 from the communication ports 52 and 53 through the gas receiving chamber 3, thereby inflating the first and second chamber 1 and 2 substantially at the same time.

The partition panels according to the above-described embodiments is sewn to the inner panel over the entire periphery thereof. However, the partition panel may be arranged so that one portion of the surrounding thereof is not sewn but is left as an opening, instead of providing the partition panel with communication ports. In this case, the gas from the inflator once flows into the gas receiving chamber, and then flows into the first and second chambers from the aforementioned opening formed by the non-sewn portion of the partition panel, and the communication ports 27 of the inner panel.

### [Advantages]

As described above in detail, according to the present invention, in the air bag of which the inside is partitioned into a plurality of chambers by the inner panel, the gas from the inflator is directly supplied from the gas receiving chamber to each of the chambers, and therefore, all chambers complete the inflation thereof substantially at the same time, thereby reducing the time required to complete the inflation of the air bag.

## Claims

1. An air bag of which the inside is partitioned into a plurality of chambers (1, 2), and which is inflated by gas from an inflator (36), comprising:
an inner panel (22; 22'; 22") that partitions the inside of said air bag into a first chamber (1) disposed at the center of said air bag and a second chamber (2) surrounding said first chamber (1), as said plurality of chambers (1, 2),
**characterized by**
a gas receiving chamber (3) for receiving the gas from said inflator (36), the gas receiving chamber (3) being separated from said first and second chambers (1, 2); and
communication ports (13a, 27; 50-53) provided so as to directly supply the gas from said gas receiving chamber (3) to each of said plurality of chambers (1, 2).

2. An air bag according to claim 1, wherein:
said air bag includes a front panel (12) disposed on the occupant side and a rear panel (14) disposed on the opposite side of the occupant, said front panel (12) and said rear panel (14) being connected at their peripheral edge portions with each other;
an opening (16) for the inflator (36) is provided at the center of said rear panel (14);
an opening (24) disposed substantially concentrically with the opening (16) of said rear panel (14), is provided at the center of said inner panel (22);
the peripheral edge portion of said inner panel (22) is connected to the intermediate portion between the central portion and the peripheral edge portion of said front panel (12);
a partition panel (13) that partitions the inside of said first chamber (1), thereby forming said gas receiving chamber (3) on the side of said opening (16) for the inflator (36), is connected to said inner panel (22);
communication ports (13a) for allowing said gas receiving chamber (3) to communicate with said first chamber (1), are provided in said partition panel (13); and
communication ports (27) for allowing said gas receiving chamber (3) to communicate with said second chamber (2), are provided in said inner panel (22).

3. An air bag according to claim 1, wherein:
said air bag includes a front panel (12) disposed on the occupant side and a rear panel (14) disposed on the opposite side of the occupant, said front panel (12) and said rear panel (14) being connected at their peripheral edge portions with each other;
an opening (16) for the inflator (36) is provided at the center of said rear panel (14);
a partition panel (13') that forms said gas receiving chamber (3) between said inner panel (22') and said opening (16) for the inflator (36), is provided;
an opening disposed substantially concentrically with the opening (16) of said rear panel (14), is provided at the center of said partition panel (13');
the peripheral edge portion of said partition panel (13') is connected to the intermediate portion between the central portion and the peripheral edge portion of said inner panel (22');
communication ports (50) for allowing said first chamber (1) to communicate with said gas receiving chamber (3), are provided in said inner panel (22'); and
communication ports (51) for allowing said gas receiving chamber (3) to communicate with said second chamber (2), are provided in said partition panel (13').

4. An air bag according to claim 1, wherein:
said air bag includes a front panel (12) disposed on the occupant side and a rear panel (14) disposed on the opposite side of the occupant, said front panel (12) and said rear panel (14) being connected at their peripheral edge portions with each other;
an opening (16) for the inflator (36) is provided at the center of said rear panel (14);
a cylindrical partition panel (13") of which the inside is formed as said gas receiving chamber (3) is provided in said air bag, said partition panel (13") having an opening disposed substantially concentrically with the opening (16) of said rear panel (14);
the peripheral edge portion of said inner panel (22") is connected to said front panel (12), and the central portion of said inner panel (22") is connected to said partition panel (13");
communication ports (52) for allowing said first chamber (1) to communicate with said gas receiving chamber (3), are provided in each of said inner panel (22") and said partition panel (13"); and
the end portions of said cylindrical partition panel (13") constitute communication ports (53) for allowing said gas receiving chamber (3) to communicate with said second chamber (2).

5. An air bag according to any one of claims 2 to 4, wherein vent holes (18) are provided in said rear panel (14), and wherein inner vent holes (28) for allowing said first chamber (1) to communicate with said second chamber (2), are provided in said inner panel (22).

6. An airbag device comprising an air bag (10) according to any one of claims 1-5 and an inflator (36) for inflating the air bag (10).

## Patentansprüche

1. Airbag, dessen Inneres in eine Mehrzahl von Kammern (1, 2) aufgeteilt ist und welcher durch Gas von einer Aufblasvorrichtung (36) aufgeblasen wird, umfassend:
eine innere Platte (22; 22'; 22''), welche das Innere des Airbags in eine erste Kammer (1), welche in der Mitte des Airbags angeordnet ist, und eine zweite Kammer (2), welche die erste Kammer (1) umgibt, als die Mehrzahl der Kammern (1, 2) aufteilt,
**gekennzeichnet durch**
eine Gas aufnehmende Kammer (3), um das Gas von der Aufblasvorrichtung (36) aufzunehmen, wobei die Gas aufnehmende Kammer (3) von der ersten und zweiten Kammer (1, 2) getrennt ist; und
Verbindungsanschlüsse (13a, 27; 50-53), welche derart vorhanden sind, dass sie das Gas von der Gas aufnehmenden Kammer (3) zu jeder aus der Mehrzahl der Kammern (1, 2) zuführen.

2. Airbag nach Anspruch 1, wobei:
der Airbag eine vordere Platte (12), welche auf der Insassenseite angeordnet ist, und eine hintere Platte (14), welche auf der dem Insassen gegenüberliegenden Seite angeordnet ist, aufweist, wobei die vordere Platte (12) und die hintere Platte (14) an ihren Umfangskantenabschnitten miteinander verbunden sind;
eine Öffnung (16) in der Mitte der hinteren Platte (14) für die Aufblasvorrichtung (36) vorhanden ist;
eine Öffnung (24), welche im Wesentlichen konzentrisch mit der Öffnung (16) der hinteren Platte (14) ist, in der Mitte der inneren Platte (22) vorhanden ist;
wobei der Umfangskantenabschnitt der inneren Platte (22) mit dem Zwischenabschnitt zwischen dem Mittelabschnitt und dem Umfangskantenabschnitt der vorderen Platte (12) verbunden ist;
eine Aufteilungsplatte (13), welche das Innere der ersten Kammer (1) aufteilt, wodurch die Gas aufnehmende Kammer (3) auf der Seite der Öffnung (16) für die Aufblasvorrichtung ausgebildet wird, mit der inneren Platte (22) verbunden ist; Verbindungsanschlüsse (13a), damit die Gas aufnehmende Kammer (3) mit der ersten Kammer (1) kommunizieren kann, in der Aufteilungsplatte (13) vorhanden sind; und
Verbindungsanschlüsse (27), damit die Gas aufnehmende Kammer (3) mit der zweiten Kammer (2) kommunizieren kann, in der inneren Platte (22) vorhanden sind.

3. Airbag nach Anspruch 1, wobei:
der Airbag eine vordere Platte (12), welche auf der Insassenseite angeordnet ist, und eine hintere Platte (14), welche auf der dem Insassen gegenüberliegenden Seite angeordnet ist, aufweist, wobei die vordere Platte (12) und die hintere Platte (14) an ihren Umfangskantenabschnitten miteinander verbunden sind;
eine Öffnung (16) für die Aufblasvorrichtung (36) in der Mitte der hinteren Platte (14) vorhanden ist;
eine Aufteilungsplatte (13'), welche die Gas aufnehmende Kammer (3) zwischen der inneren Platte (22') und der Öffnung (16) für die Aufblasvorrichtung (36) ausbildet, vorhanden ist;
eine Öffnung, welche im Wesentlichen konzentrisch zu der Öffnung (16) der hinteren Platte (14) angeordnet ist, in der Mitte der Aufteilungsplatte (13') vorhanden ist;
der Umfangskantenabschnitt der Aufteilungsplatte (13') mit dem Zwischenabschnitt zwischen dem Mittelabschnitt und dem Umfangskantenabschnitt der inneren Platte (22') verbunden ist;
Verbindungsanschlüsse (50), damit die erste Kammer (1) mit der Gas aufnehmenden Kammer (3) kommunizieren kann, in der inneren Platte (22') vorhanden sind; und
Verbindungsanschlüsse (51), damit die Gas aufnehmende Kammer (3) mit der zweiten Kammer (2) kommunizieren kann, in der Aufteilungsplatte (13') vorhanden sind.

4. Airbag nach Anspruch 1, wobei:
der Airbag eine vordere Platte (12), welche auf der Insassenseite angeordnet ist, und eine hintere Platte (14), welche auf der dem Insassen gegenüberliegenden Seite angeordnet ist, aufweist, wobei die vordere Platte (12) und die hintere Platte (14) an ihren Umfangskantenabschnitten miteinander verbunden sind;
eine Öffnung (16) für die Aufblasvorrichtung (36) in der Mitte der hinteren Platte (14) vorhanden ist;
eine zylindrische Aufteilungsplatte (13''), dessen Inneres als die Gas aufnehmende Kammer (3) ausgebildet ist, in dem Airbag vorhanden ist, wobei die Aufteilungsplatte (13'') eine Öffnung aufweist, welche im Wesentlichen konzentrisch zu der Öffnung (16) der hinteren Platte (14) angeordnet ist;
der Umfangskantenabschnitt der inneren Platte (22'') mit der vorderen Platte (12) verbunden ist und der Mittelabschnitt der inneren Platte (22'') mit der Aufteilungsplatte (13'') verbunden ist;
Verbindungsanschlüsse (52) sowohl in der inneren Platte (22'') als auch in der Aufteilungsplatte (13'') vorhanden sind, damit die erste Kammer (1) mit der Gas aufnehmenden Kammer (3) kommunizieren kann; und
die Endabschnitte der zylindrischen Aufteilungsplatte (13'') Verbindungsanschlüsse (53) ausbilden, damit die Gas aufnehmende Kammer (3) mit der zweiten Kammer (2) kommunizieren kann.

5. Airbag nach einem der Ansprüche 2 des 4, wobei Entlüftungslöcher (18) in der hinteren Platte (14) vorhanden sind und wobei innere Entlüftungslöcher (28) in der inneren Platte (22) vorhanden sind, damit die erste Kammer (1) mit der zweiten Kammer (2) kommunizieren kann.

6. Airbagvorrichtung, welche einen Airbag (10) nach einem der Ansprüche 1-5 und eine Aufblasvorrichtung (36) zum Aufblasen des Airbags (10) umfasst.

## Revendications

1. Coussin gonflable ou airbag dont l'intérieur est séparé en une pluralité de chambres (1, 2) et qui est gonflé avec du gaz provenant d'un gonfleur (36) comprenant :
- un panneau interne (22 ; 22' ; 22") qui sépare l'intérieur dudit coussin gonflable en une première chambre (1) disposée au centre dudit coussin gonflable et en une seconde chambre (2) entourant ladite première chambre (1), au titre de ladite pluralité de chambres (1, 2),
**caractérisé en ce qu'**il comprend :
- une chambre de réception de gaz (3) pour recevoir le gaz dudit gonfleur (36), la chambre de réception de gaz (3) étant séparée desdites première et seconde chambres (1, 2) ; et
- des orifices de communication (13a, 27 ; 50 à 53) prévus afin de fournir directement le gaz provenant de ladite chambre de réception de gaz (3) à chacune de ladite pluralité de chambres (1,2).

2. Coussin gonflable selon la revendication 1, dans lequel :
- ledit coussin gonflable comprend un panneau avant (12) disposé du côté de l'occupant et un panneau arrière (14) disposé du côté opposé à l'occupant, ledit panneau avant (12) et ledit panneau arrière (14) étant raccordés entre eux au niveau de leurs parties de bord périphérique ;
- une ouverture (16) pour le gonfleur (36) est prévue au centre dudit panneau arrière (14) ;
- une ouverture (24) disposée de manière sensiblement concentrique avec l'ouverture (16) dudit panneau arrière (14), est prévue au centre dudit panneau interne (22) ;
- la partie de bord périphérique dudit panneau interne (22) est raccordée à la partie intermédiaire entre la partie centrale et la partie de bord périphérique dudit panneau avant (12) ;
- un panneau de séparation (13) qui sépare l'intérieur de ladite première chambre (1), formant ainsi ladite chambre de réception de gaz (3) du côté de ladite ouverture (16) pour le gonfleur (36), est raccordé audit panneau interne (22) ;
- des orifices de communication (13a) pour permettre à ladite chambre de réception de gaz (3) de communiquer avec ladite première chambre (1), sont prévus dans ledit panneau de séparation (13) ; et
- des orifices de communication (27) pour permettre à ladite chambre de réception de gaz (3) de communiquer avec ladite seconde chambre (2), sont prévus dans ledit panneau interne (22).

3. Coussin gonflable selon la revendication 1, dans lequel :
- ledit coussin gonflable comprend un panneau avant (12) disposé du côté de l'occupant et un panneau arrière (14) disposé du côté opposé à l'occupant, ledit panneau avant (12) et ledit panneau arrière (14) étant raccordés entre eux au niveau de leurs parties de bord périphérique ;
- une ouverture (16) destinée au gonfleur (36) est prévue au centre dudit panneau arrière (14) ;
- est prévu un panneau de séparation (13') qui forme ladite chambre de réception de gaz (3) entre ledit panneau interne (22') et ladite ouverture (16) destinée au gonfleur (36) ;
- une ouverture disposée de manière sensiblement concentrique avec l'ouverture (16) dudit panneau arrière (14), est prévue au centre dudit panneau de séparation (13');
- la partie de bord périphérique dudit panneau de séparation (13') est raccordée à la partie intermédiaire entre la partie centrale et la partie de bord périphérique dudit panneau interne (22') ;
- des orifices de communication (50) pour permettre à ladite première chambre (1) de communiquer avec ladite chambre de réception de gaz (3), sont prévus dans ledit panneau interne (22') ; et
- des orifices de communication (51) pour permettre à ladite chambre de réception de gaz (3) de communiquer avec ladite seconde chambre (2), sont prévus dans ledit panneau de séparation (13').

4. Coussin gonflable selon la revendication 1, dans lequel :
- ledit coussin gonflable comprend un panneau avant (12) disposé du côté de l'occupant et un panneau arrière (14) disposé du côté opposé à l'occupant, ledit panneau avant (12) et ledit panneau arrière (14) étant raccordés entre eux au niveau de leurs parties de bord périphérique ;
- une ouverture (16) destinée au gonfleur (36) est prévue au centre dudit panneau arrière (14);
- un panneau de séparation cylindrique (13") dont l'intérieur est formé en tant que chambre de réception de gaz (3), est prévu dans ledit coussin gonflable, ledit panneau de séparation (13") ayant une ouverture disposée de manière sensiblement concentrique avec l'ouverture (16) dudit panneau arrière (14) ;
- la partie de bord périphérique dudit panneau interne (22") est raccordée audit panneau avant (12), et la partie centrale dudit panneau interne (22") est raccordée audit panneau de séparation (13") ;
- des orifices de communication (52) pour permettre à ladite première chambre (1) de communiquer avec ladite chambre de réception de gaz (3), sont prévus dans chacun parmi ledit panneau interne (22") et ledit panneau de séparation (13") ; et
- les parties d'extrémité dudit panneau de séparation cylindrique (13") constituent des orifices de communication (53) pour permettre à ladite chambre de réception de gaz (3) de communiquer avec ladite seconde chambre (2).

5. Coussin gonflable selon l'une quelconque des revendications 2 à 4, dans lequel des trous d'évacuation (18) sont prévus dans ledit panneau arrière (14), et dans lequel des trous d'évacuation internes (28) pour permettre à ladite première chambre (1) de communiquer avec ladite seconde chambre (2), sont prévus dans ledit panneau interne (22).

6. Dispositif de coussin gonflable comprenant un coussin gonflable (10) selon l'une quelconque des revendications 1 à 5 et un gonfleur (36) pour gonfler le coussin gonflable (10).
